# EUROPÄISCHE PATENTSCHRIFT

(11) **EP 3 170 682 B1**
(45) Veröffentlichungstag und Bekanntmachung des Hinweises auf die Patenterteilung: **10.07.2019**
(21) Anmeldenummer: 16198847.2
(22) Anmeldetag: 15.11.2016
(51) Int. Cl.: B60C 23/00, B60C 23/10

(54) **REIFENBEFÜLLVORRICHTUNG FÜR EIN FAHRZEUGRAD**
TYRE INFLATION DEVICE FOR A VEHICLE WHEEL
DISPOSITIF DE GONFLAGE DE PNEU DE ROUE DE VÉHICULE

(30) Priorität: 20.11.2015 DE 102015120134
(43) Veröffentlichungstag der Anmeldung: 24.05.2017
(73) Patentinhaber: BPW Bergische Achsen KG, 51674 Wiehl (DE)
(72) Erfinder: Kopplow, Hans Werner, 51588 Nümbrecht (DE); Rossenbach, Bernhard, 51674 Wiehl (DE)
(74) Vertreter: Bungartz Christophersen Partnerschaft mbB Patentanwälte

(56) Entgegenhaltungen:
- WO-A1-97/02961
- WO-A1-2015/066792
- DE-A1- 4 036 362
- DE-A1- 10 001 348
- DE-A1-102008 062 071
- DE-A1-102014 117 459
- DE-C- 256 369
- GB-A- 122 301
- US-A- 5 505 080

## Beschreibung

Die Erfindung betrifft eine Reifenbefüllvorrichtung für ein Fahrzeug, mit einem Luftkompressor, welcher über eine Luftzuleitung an das Luftvolumen im Reifen des Fahrzeugrades angeschlossen ist, wobei das Fahrzeugrad an einer drehgelagerten Radnabe befestigt ist.

Zur Sicherstellung eines jederzeit ausreichenden Luftdrucks in Fahrzeugreifen sind bordeigene Reifenfüllsysteme bekannt, die den Luftdruck im Fahrzeugreifen überwachen und fehlendes Luftvolumen, ggf. auch während der Fahrt, ersetzen, so z. B. in der DE 10 2014 117 459 A1, der DE 40 36 362 A1, der DE 100 01 348 A1, der US 5,505080 A, der WO 97/02961 A1, der DE 10 2008 062 071 A1, der WO 2015/066792 A1, der GB 122,301 A und der DE 256369 C beschrieben. Hierzu befindet sich an Bord des Fahrzeugs ein Luftkompressor, von dem aus eine Luftzuleitung zu dem jeweiligen Reifen führt. In der DE 10 2014 117 459 A1 ist der Kompressor an einer drehfest auf der Radnabe befestigten Abdeckung angeordnet. Der Kompressor ist an der nach fahrzeuginnen weisenden Seite der Abdeckung befestigt. In der DE 40 36 362 A1 ist eine mit dem Fahrzeugrad mit-rotierende Reifenbefüllvorrichtung beschrieben, bei der das Kompressorgehäuse unmittelbar auf die Radnabe aufgeschraubt ist.

Da sich der Reifen mit dem Fahrzeugrad dreht, weist die Druckleitung zumindest eine bewegliche Schnittstelle auf, d. h. eine rotationsfähige, gleichwohl abgedichtete Druckluftverbindung. Diese stellt hohe Anforderungen an eine auch dauerhafte Abdichtung. Schwierigkeiten bereitet insbesondere, dass die Elemente der Dichtung unter hohem Druck stehen, der bei Nutzfahrzeugreifen bis zu 8 bar betragen kann. Durch diesen Druck erhöht sich der bereits mit der Rotation verbundene Verschleiß und damit die Gefahr von Leckagen.

Der Erfindung liegt die **Aufgabe** zugrunde, eine Reifenbefüllvorrichtung für ein mit einem bordeigenen Luftkompressor ausgerüstetes Fahrzeug zu schaffen, mit der auch bei längerem Gebrauch Dichtprobleme im Bereich der von dem Luftkompressor zu dem jeweiligen Reifen verlaufenden Druckleitung vermieden werden.

Zur **Lösung** dieser Aufgabe ist eine Reifenbefüllvorrichtung mit den eingangs angegebenen Merkmalen dadurch gekennzeichnet, dass der Luftkompressor an einer drehfest auf der Radnabe befestigten Abdeckung angeordnet ist, und dass die Abdeckung die Drehlagerung nach fahrzeugaußen verschließt, wobei der Luftkompressor (20) in einem Kompressorgehäuse (21) angeordnet ist, welches von fahrzeugaußen her an der Abdeckung (15) befestigt ist.

Eine solche Reifenbefüllvorrichtung nutzt den prinzipiellen Vorteil des bordeigenen Luftkompressors, da die Kontrolle und ggfs. der Ausgleich des Luftvolumens im Reifen jederzeit und auch während der Fahrt möglich sind. Zugleich werden verschleißanfällige Relativbewegungen in der Druckluftverbindung zwischen dem Luftkompressor und dem jeweiligen Reifenvolumen vermieden, indem der Luftkompressor Bestandteil der sich im Fahrbetrieb drehenden Teile des Fahrzeugs ist, sich also mit dem Fahrzeugrad bzw. mit der Radnabe dreht. Dies ermöglicht eine Druckluftverbindung ohne eine Relativbewegungen durchführende Schnittstelle. Allenfalls den unbedeutenden Fliehkräften ist die von dem Luftkompressor zu dem Luftvolumen des Reifens führende Druckluftverbindung unterworfen.

Der Luftkompressor ist Teil einer Abdeckung außen an der Fahrzeugradnabe. Die Abdeckung kann z. B. so ausgebildet sein, dass sie die Radlagerung des Fahrzeugrades nach fahrzeugaußen verschließt, wozu sie drehfest auf der Radnabe befestigt ist. Eine Abdeckung der Radlagerung ist, vor allem bei Nutzfahrzeugachsen, zum Schutz der Radlagerung vor Verschmutzung ohnehin vorhanden, so dass die dortige Integration oder Befestigung des Luftkompressors ohne bauliche Probleme möglich ist.

Von dem Luftkompressor aus kann die Druckluftleitung zum Beispiel entlang der fahrzeugäußeren Seite des Fahrzeugrades zu dem Reifenbefüllventil des Fahrzeugrades geführt sein. Vorzugsweise ist die Luftzuleitung an ihrem Ende mit einem Adapter versehen, mit dem sich die Luftzuleitung druckdicht an das zumeist fahrzeugaußen an dem Fahrzeugrad angeordnete Reifenbefüllventil anschließen lässt.

Zur Bereitstellung der Kompressorleistung kann der Luftkompressor mit einem elektrischen Antrieb versehen sein, wobei zumindest eine elektrische Zuleitung des Antriebs eine z. B. als Schleifkontakt ausgebildete Verbindung aufweist. Der Schleifkontakt kann entweder ein entlang einer Kreisbahn arbeitender Schleifkontakt, oder ein zentral auf der Nabenachse arbeitender Schleifkontakt sein. Die weitere bzw. zweite elektrische Zuleitung des Antriebs kann entweder ebenfalls über einen entsprechenden Schleifkontakt realisiert sein, oder aber die metallisch leitenden Teile der Radnabe bzw. der Radlagerung übernehmen die Funktion des Stromleiters. Alternativ ist auch eine induktive elektrische Schnittstelle denkbar.

Mit einer weiteren Ausgestaltung wird vorgeschlagen, dass der elektrische Antrieb mit 24 Volt Betriebsspannung arbeitet. Dies ist die Betriebsspannung, welche das Bordnetz eines modernen Nutzfahrzeugs und Nutzfahrzeuganhängers zur Verfügung stellt. Mit einer Betriebsspannung von 24 Volt lassen sich mehrere Luftkompressoren für mehrere Reifen parallel betreiben, ohne die Funktion der übrigen elektrischen Komponenten des Fahrzeugs zu beeinträchtigen.

Mit einer Ausführungsform der Erfindung wird vorgeschlagen, dass die elektrische Zuleitung durch die Radnabe oder durch einen Bestandteil der Radnabe geführt ist. So sieht z. B. eine vorteilhafte Lösung vor, dass die elektrische Zuleitung durch eine Öffnung in einem Nabenflansch führt, welcher Bestandteil der Radnabe ist, und an welchem das Fahrzeugrad befestigt ist.

Gemäß einer weiteren Ausgestaltung befindet sich die als Schleifkontakt oder als Induktivschnittstelle ausgebildete elektrische Verbindung fahrzeuginnen an der Radnabe. In diesem Fall ist der Schleifkontakt vorzugsweise als entlang einer Kreisbahn arbeitender Schleifkontakt ausgestaltet.

Zur Bereitstellung der Kompressorleistung kann aber auch die Bewegungsenergie des rollenden Fahrzeuges ausgenutzt werden, in welchem Fall der separate elektrische Antrieb und elektrische Leitungen für die Antriebsenergie des Kompressors entfallen. Stattdessen wird bei dieser Ausführungsform der Luftkompressor mechanisch aus der Relativbewegung der Abdeckung gegenüber dem Achselement, auf dem die Radnabe drehgelagert ist, angetrieben.

Gemäß einer Ausgestaltung dieses mechanischen Antriebs ist Bestandteil des Kompressorantriebs ein Ritzel, welches mit einer an dem Achselement ausgebildeten Verzahnung kämmt.

Um ein dauerndes Antreiben des Kompressors zu vermeiden, kann das Ritzel soweit parallel zur Nabenachse verlagerbar ausgebildet sein, bis es zum Eingriff des Ritzels in die Verzahnung kommt. Auf diese Weise wird der Kompressor nur angetrieben, wenn Druckluftbedarf entsteht.

Bei einer anderen Ausführungsform, bei der der Luftkompressor ebenfalls mechanisch aus der Bewegungsenergie des rollenden Fahrzeugs angetrieben wird, ist Bestandteil des Kompressorantriebs ein längs der Nabenachse verlagerbar ausgebildeter Konus, wobei das Achselement auf der Nabenachse mit einem korrespondierenden Konus versehen ist, so dass es bei Kontakt der Konen zu einer Mitnahme kommt.

Erfindungsgemäß ist der Luftkompressor in einem eigenen Kompressorgehäuse angeordnet, welches an der Abdeckung befestigt ist, von fahrzeugaußen her. Dies ermöglicht ein einfaches Lösen des Kompressors von der Abdeckung, etwa bei einem Defekt an dem Kompressor. Beispielsweise kann das Kompressorgehäuse durch eine Drehung von vorzugsweise weniger als 180° an der Abdeckung befestigbar sein.

Gemäß einer weiteren Ausgestaltung weist der Luftkompressor eine Luftansaugöffnung auf, die auf dem Umfang des Kompressorgehäuses angeordnet ist.

Ferner wird vorgeschlagen, dass das Kompressorgehäuse zusätzlich durch eine von außen auf das Kompressorgehäuse aufgesetzte Kappe abgedeckt ist, wobei zwischen der Kappe und dem Umfang des Kompressorgehäuses ein nur zu der Radnabe hin offener Ringspalt angeordnet ist, in dem sich die Luftansaugöffnung befindet. Diese Ausgestaltung führt zu einem Umweg, den die Umgebungsluft auf dem Weg zu der Luftansaugöffnung des Luftkompressors nehmen muss. Dies verhindert, dass z. B. grobe Schmutzpartikel in den Bereich der Luftansaugöffnung gelangen.

Ebenfalls zur Vermeidung von Verschmutzungen im Bereich der Luftansaugöffnung wird mit einer weiteren Ausgestaltung eine Dichtung vorgeschlagen, die in dem Ringspalt zwischen dessen zu der Radnabe hin gerichteter Öffnung und der Luftansaugöffnung des Luftkompressors angeordnet ist. Vorzugsweise ist diese Dichtung ringförmig um die Abdeckung und/oder um das Kompressorgehäuse herum angeordnet.

Mit einer weiteren Ausgestaltung wird vorgeschlagen, dass der Luftkompressor eine im Wesentlichen flache, zylindrische Form aufweist, bei der das Verhältnis der Länge in Richtung der Nabenachse zu dem Durchmesser 0,1 - 0,4 beträgt.

Mit einer weiteren Ausgestaltung wird vorgeschlagen, dass der Ausgangsdruck des Luftkompressors mehr als 7 bar beträgt.

Im Folgenden ist die Erfindung anhand von Ausführungsbeispielen unter Bezugnahme auf die Zeichnungen und die darin wiedergegebenen Einzelheiten näher erläutert. Es zeigen:
- Fig. 1: in einer als Längsschnitt wiedergegebenen Explosionsdarstellung die vereinzelten Elemente einer Reifenbefüllvorrichtung vor einer Radnabe mit einem daran befestigten Fahrzeugrad;
- Fig.2: die Gegenstände nach Fig. 1 bei montierter und angeschlossener Reifenbefüllvorrichtung;
- Fig. 3: eine andere Ausführungsform der an der Radnabe montierten Reifenbefüllvorrichtung;
- Fig. 4: eine andere, hier rein mechanisch angetriebene Ausführungsform der an der Radnabe montierten Reifenbefüllvorrichtung, und
- Fig. 5: eine nochmals andere, ebenfalls rein mechanisch angetriebene Ausführungsform der an der Radnabe montierten Reifenbefüllvorrichtung.

Die hier beschriebene Reifenbefüllvorrichtung ist besonders geeignet für Nutzfahrzeuge und insbesondere nicht-angetriebene Achsen von Nutzfahrzeugen und Nutzfahrzeuganhängern.

Die Fahrzeugachse 1, welche z. B. eine starre, von der einen zur anderen Fahrzeugseite durchgehende Achse sein kann, ist an ihren Enden jeweils mit einem verjüngten Achselement 2 versehen, welches den Achsschenkel der Fahrzeugachse bildet. Auf dem Achselement 2 ist über eine Drehlagerung 3, welche hier aus zwei Wälzlagern besteht, eine Radnabe 5 auf der Nabenachse A drehbar gelagert. Auf ihrem Außenumfang ist die Radnabe 5 mit einem einstückig angeformten Nabenflansch 6 versehen, an dem mittels mehrerer Radbolzen 7 ein Fahrzeugrad 10 befestigt ist.

Das Fahrzeugrad 10 besteht in üblicher Weise aus der Radfelge sowie dem mit Luft befüllten Reifen. In ebenfalls herkömmlicher Bauart ist der Reifen mit einem Reifenbefüllventil versehen, welches sich vorzugsweise auf der fahrzeugäußeren Seite des Fahrzeugrades 10 bzw. der Felge des Fahrzeugrades befindet.

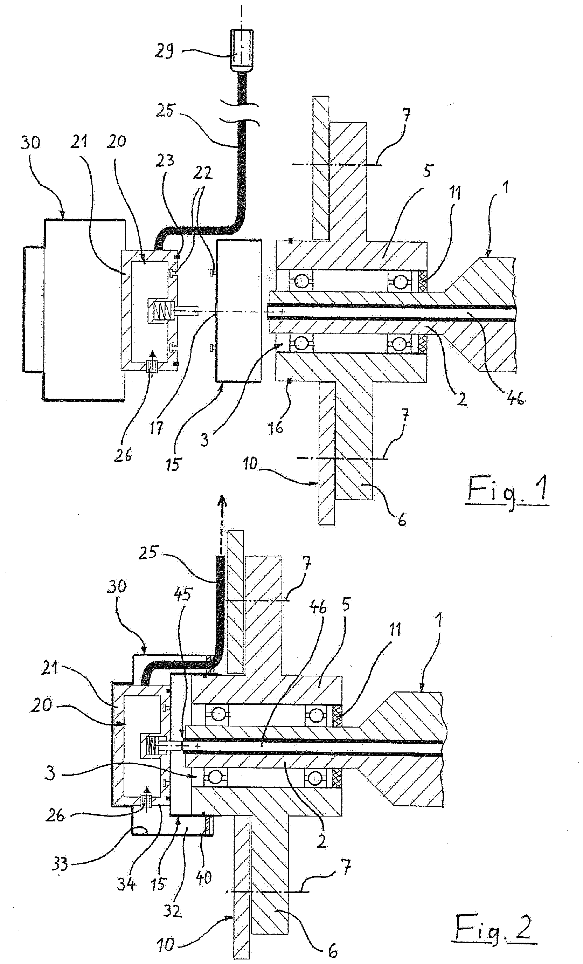

In Fig. 1 sind im rechten Teil nur der Achsschenkel 2 der Fahrzeugachse 1, die Radnabe 5 mit der Radlagerung und Teile des Fahrzeugrades 10 wiedergegeben. Zu erkennen ist, dass in diesem vorläufigen Montagezustand die zwischen Achsschenkel 2 und Radnabe 5 angeordnete Radlagerung 3 nach fahrzeugaußen hin offen und ungeschützt ist, wohingegen die Radlagerung nach fahrzeuginnen hin durch eine geeignete Schleifdichtung 11 gegen Staub und Schmutz geschützt ist.

Zum Schutz der Drehlagerung 3 auch nach fahrzeugaußen hin ist eine als Abdeckkappe ausgebildete Abdeckung 15 vorgesehen. Diese ist gemäß Fig. 2 von außen auf die Radnabe 5 aufgesetzt.

Eine an der Radnabe 5 und/oder an der Abdeckung 15 angeordnete Ringdichtung 16 führt zu einer wirksamen Abdichtung zwischen der Abdeckung 15 und der Radnabe 5. Die Befestigung der Abdeckung 15 erfolgt z. B. durch ihr Verschrauben auf der Radnabe 5, oder durch eine Bajonettverriegelung. In letzterem Fall reicht bereits eine Drehung von z. B. 20° aus, um die Abdeckung 15 an der Radnabe 15 zu verriegeln.

Von außen her ist an der kappenförmig gestalteten Abdeckung 15 ein Kompressorgehäuse 21 mit einem darin angeordneten Luftkompressor 20 befestigbar. Die drehfeste Verbindung des Kompressorgehäuses 21 mit der Abdeckung 15 erfolgt über Verbindungselemente 22.

Die Abdeckung 15 ist mit einer zentralen Durchtrittsöffnung 17 versehen, durch die die elektrische Versorgung des Luftkompressors 20, hier in Form eines Schleifkontaktes, hindurchgeführt ist. Um ein dortiges Eindringen von Schmutz oder dergleichen in die Radlagerung zu verhindern, ist eine Dichtung 23 zwischen dem Kompressorgehäuse 21 und der Abdeckung 15 vorgesehen.

Der Luftkompressor 20 ist bei dieser Ausführungsform elektrisch angetrieben. Er ist dazu ausgebildet, Luft zu komprimieren und diese Druckluft über eine Luftzuleitung 25 zu dem vorhandenen Reifenbefüllventil des Fahrzeugreifens zu fördern, um so einen Druckabfall in dem Reifen auszugleichen, gegebenenfalls auch während der Fahrt, d. h. bei drehendem Fahrzeugrad 10. Baugleiche Reifenbefüllsysteme befinden sich auch an den anderen Fahrzeugrädern 10 des Fahrzeugs.

Die zu dem Luftvolumen im Reifen führende Luftzuleitung 25 ist ein flexibler Druckschlauch, welcher seitlich, vorzugsweise radial, aus dem Kompressorgehäuse 21 herausführt. Zwecks Ansaugen zu komprimierender Luft aus der Umgebung ist das Kompressorgehäuse 21 mit einer Luftansaugöffnung 26 versehen. Die Luftansaugöffnung 26 befindet sich vorzugsweise auf der Mantelfläche des Kompressorgehäuses 21. Durch den Kompressor 20 angesaugte Umgebungsluft strömt in diesem Fall radial in das Kompressorgehäuse 21 ein.

Gemäß Fig. 2 ist auf das vorzugsweise zylindrisch gestaltete Kompressorgehäuse 21 von fahrzeugaußen her eine Kappe 30 aufgesetzt. Die Kappe 30 ist von solcher Größe, dass sie sowohl das Kompressorgehäuse 21, als auch die Abdeckung 15 unter Bildung eines Ringspalts 32 umschließt. Die Kappe 30 kann z. B. mittels eines daran ausgebildeten Gewindes durch Drehen auf das mit einem entsprechenden Gegengewinde versehene Kompressorgehäuse 21 aufgeschraubt sein. Diese Drehverbindung weist den gleichen Drehsinn auf, wie die Drehverbindung zwischen der Abdeckung 15 und der Radnabe 5.

Zwischen einer Innenwandung 33 der Kappe 30 und dem Umfang 34 des Kompressorgehäuses 21 ist der nur zu der Radnabe 5 hin offene Ringspalt 32 angeordnet, in dem sich die Luftansaugöffnung 26 befindet. Angesaugte Umgebungsluft kann daher nur auf dem Umweg durch den Ringspalt 32 hindurch zu der Luftansaugöffnung 26 gelangen.

Um aus der so in den Ringspalt 32 eintretenden Umgebungsluft Schmutz- und Staubpartikel auszufiltern, ist eine Dichtung 40 in dem Ringspalt 32 zwischen dessen zu der Radnabe 5 hin gerichteter Öffnung und der Luftansaugöffnung 26 angeordnet. Die Dichtung 40 ist ringförmig um die Abdeckung 15 und / oder um das Kompressorgehäuse 21 herum angeordnet.

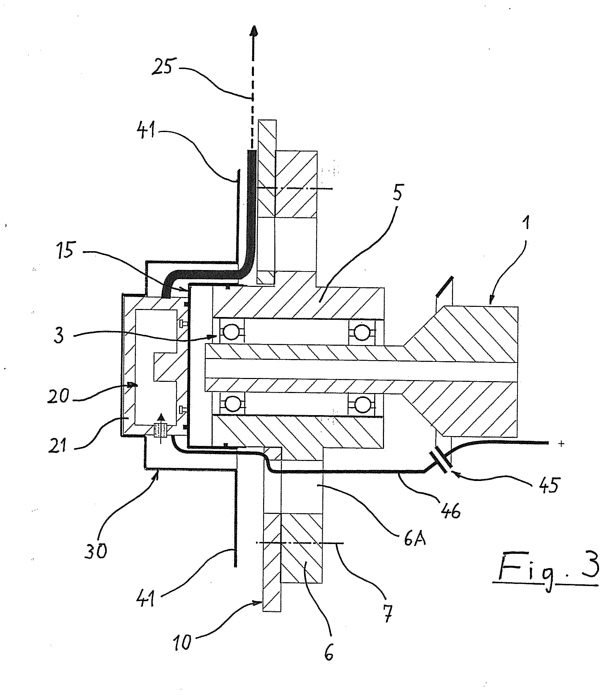

Bei der zweiten Ausführungsform nach Fig. 3 ist die Kappe 30 hutförmig gestaltet, wobei die Krempe 41 des Huts die Außenseite zumindest der Felge des Fahrzeugrades 10 bedeckt. Gemäß Fig. 3 verläuft die zu dem vorhandenen Befüllventil führende Luftzuleitung 25 größtenteils hinter dieser Krempe, und ist daher von außen nicht oder nur zu einem geringen Teil sichtbar.

Für den elektrischen Antrieb des Luftkompressors 20 weist zumindest eine elektrische Zuleitung 46 des Antriebs eine als Schleifkontakt ausgebildete Verbindung 45 auf. Diese ist bei Fig. 2 zentral am Achsschenkel 2 und damit auf der Nabenachse A angeordnet, und bei Fig. 3 auf einer Kreisbahn im Bereich des inneren Endes der Radnabe 5. Das elektrische Kabel 46 ist hier durch eine Öffnung 6A im Nabenflansch 6 geführt. Anstelle der Schleifkontakte ist auch eine induktiv arbeitende elektrische Schnittstelle denkbar.

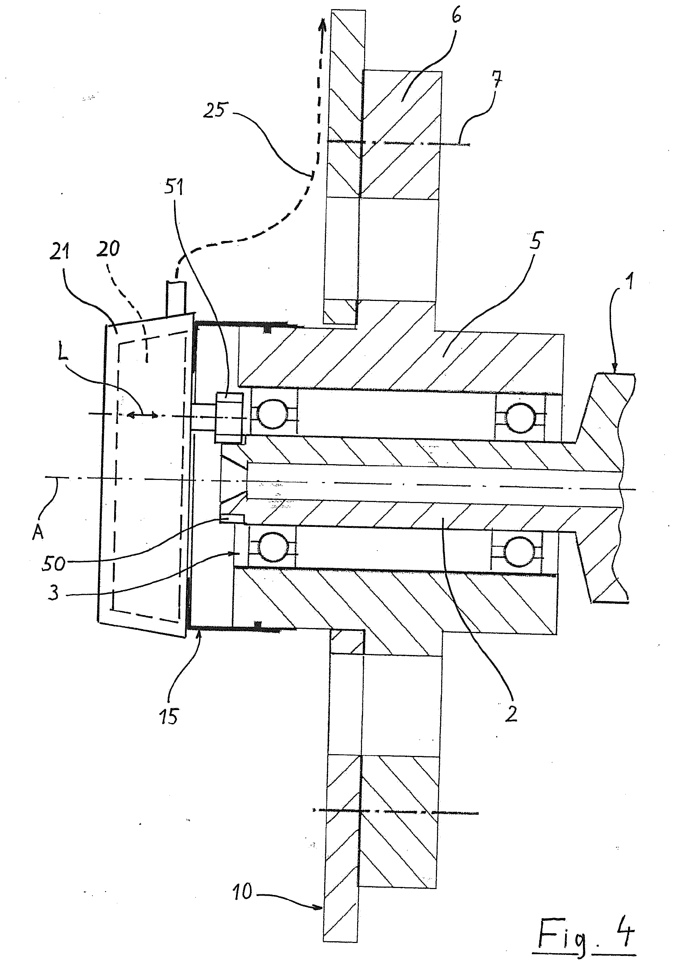

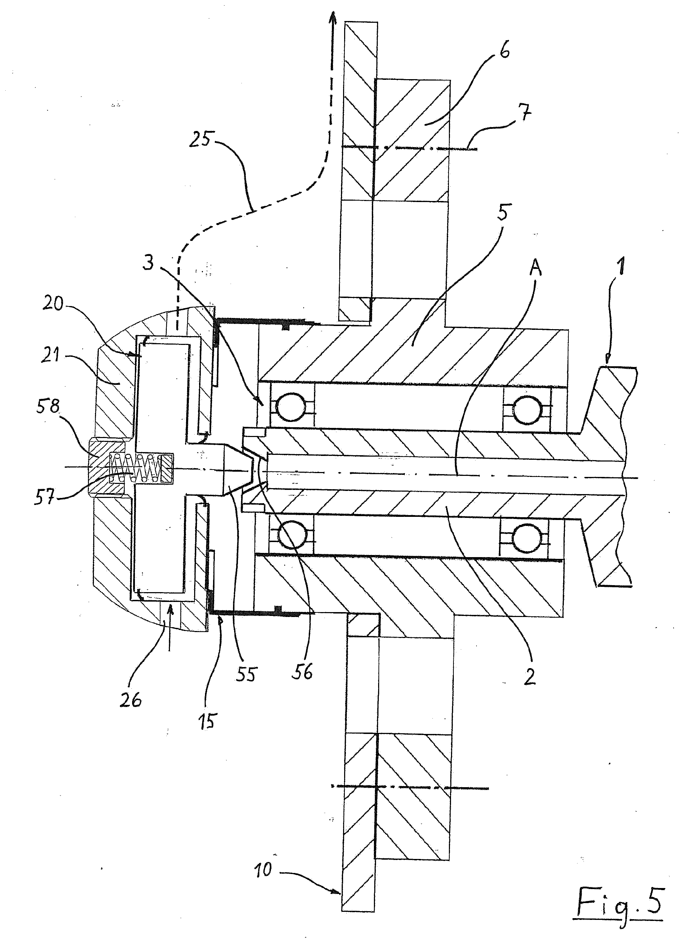

Bei den in Fig. 4 und Fig. 5 wiedergegebenen Ausführungsformen der Reifenbefüllvorrichtung erfolgt der Antrieb des Luftkompressors 20 ohne elektrische Antriebsenergie, nämlich rein mechanisch unter Ausnutzung der Energie des rollenden Fahrzeugs. Angetrieben wird der Luftkompressor 20 aus der Relativbewegung der Abdeckung 15, mit der das Kompressorgehäuse 21 verbunden ist, gegenüber dem Achselement 2, auf dem die Radnabe 5 drehgelagert ist.

Bei Fig. 4 ist das Achselement 2 mit einer Verzahnung 50 versehen, die sich über den Umfang des Endes des Achsschenkels 2 erstreckt. In die Verzahnung 50 greift ein gezahntes Ritzel 51 ein, welches in dem Kompressorgehäuse 21 drehbar gelagert ist. Das Ritzel 51 treibt dabei den Luftkompressor 20 entweder unmittelbar an, oder über ein zwischengeschaltetes Getriebe.

Das Ritzel 51 kann entweder dauernd mit der Verzahnung 50 gekoppelt sein oder nur dann, wenn Kompressorleistung zum Nachfördern von Druckluft in den Reifen gefordert ist. In letzterem Fall lässt sich das Ritzel 51 zuschalten, indem es aus einer Position, in der das Ritzel nicht mit der Verzahnung 50 kämmt, in Längsrichtung L parallel zur Nabenachse A soweit verlagert wird, dass das Ritzel 51 in die Verzahnung 50 eingreift. Das Verlagern des Ritzels 51 in Längsrichtung L kann entweder mittels eines kleinen elektrischen Stellgliedes erfolgen, oder durch ausschließlich mechanische bzw. pneumatische Mittel. Eine Möglichkeit hierzu wird im Folgenden noch anhand der weiteren Ausführungsform Fig. 5 erläutert.

Die Fig. 5 zeigt eine Ausführungsform, bei der ebenfalls die Antriebsenergie für den Luftkompressor allein aus der Rollenergie des Fahrzeugs abgeleitet wird. Zusätzlich erfolgt auch das bedarfsgerechte Ein- und Ausschalten des Luftkompressors 20 ganz ohne Einsatz von elektrischer Energie, allein durch mechanische bzw. pneumatische Mittel.

Bei der Ausführungsform nach Fig. 5 ist Bestandteil des Kompressorantriebs ein längs der Nabenachse A verlagerbar ausgebildeter Konus 55, und das Achselement 2 ist ebenfalls auf der Nabenachse A mit einem korrespondierenden Konus 56 versehen. Kommt es durch eine Längsbewegung des Konus 55, welcher den Luftkompressor 20 antreibt, zu einem Kontakt mit dem Gegenkonus 56, schließt diese Kupplung, und es kommt unmittelbar zu einer Drehbewegung des Luftkompressors. Dieser füllt Druckluft über die Luftzuleitung 25 in den zu befüllenden Reifen. Die beiden Konen 55, 56 bilden daher gemeinsam eine Kupplung.

Der Konus 55 der Kupplung ist Bestandteil eines in Längsrichtung der Nabenachse A verlagerbaren Elements, welches Bestandteil des Luftkompressors 20 ist. Dieses Element ist in die eine Richtung, nämlich zu dem Achsschenkel 2 hin, durch die Kraft einer Feder 57 beaufschlagt. In die andere Richtung, also dem Achsschenkel 2 abgewandt, ist das Element durch den Druck beaufschlagt, welcher in der Luftzuleitung 25 zu dem Reifen herrscht. Fällt dieser Druck ab, kommt es infolge der dann überwiegenden Federkraft zu einer Aktivierung der Kupplung, so dass der Luftkompressor 20 arbeitet.

Zum Einstellen des gewünschten Reifenbefülldrucks ist die Vorspannung der Feder 57 mittels eines Einstellelements 58 vorwählbar. Hierzu ist das Einstellelement 58 gegenüber dem Kompressorgehäuse 21 verschraubbar.

### Bezugszeichenliste

- 1: Fahrzeugachse
- 2: Achselement, Achsschenkel
- 3: Drehlagerung
- 5: Radnabe
- 6: Nabenflansch
- 6A: Öffnung
- 7: Radbolzen
- 10: Fahrzeugrad
- 11: Schleifdichtung
- 15: Abdeckung
- 16: Ringdichtung
- 17: Durchtrittsöffnung
- 20: Luftkompressor
- 21: Kompressorgehäuse
- 22: Verbindungselement
- 23: Dichtung
- 25: Luftzuleitung
- 26: Luftansaugöffnung
- 29: Adapter
- 30: Kappe
- 32: Ringspalt
- 33: Innenwandung
- 34: Umfang des Kompressorgehäuses
- 40: Dichtung
- 41: Krempe
- 45: Verbindung, Schleifkontakt
- 46: elektrische Zuleitung, Kabel
- 50: Verzahnung
- 51: Ritzel
- 55: Konus
- 56: Konus
- 57: Feder
- 58: Einstellelement

- A: Nabenachse
- L: Längsrichtung

## Patentansprüche

1. Reifenbefüllvorrichtung für ein Fahrzeug, mit einem Luftkompressor (20), welcher über eine Luftzuleitung (25) an das Luftvolumen im Reifen des Fahrzeugrades (10) angeschlossen ist, wobei das Fahrzeugrad (10) an einer drehgelagerten Radnabe (5) befestigt ist, **dadurch gekennzeichnet, dass** der Luftkompressor (20) an einer drehfest auf der Radnabe (5) befestigten Abdeckung (15) angeordnet ist, und dass die Abdeckung (15) die Drehlagerung (3) nach fahrzeugaußen verschließt, wobei der Luftkompressor (20) in einem Kompressorgehäuse (21) angeordnet ist, welches von fahrzeugaußen her an der Abdeckung (15) befestigt ist.

2. Reifenbefüllvorrichtung nach Anspruch 1, **dadurch gekennzeichnet, dass** die Luftzuleitung (25) mit einem Adapter (29) zur druckdichten Verbindung mit dem vorzugsweise auf der fahrzeugäußeren Seite des Fahrzeugrades (10) angeordneten Reifenbefüllventil versehen ist.

3. Reifenbefüllvorrichtung nach einem der Ansprüche 1 oder 2, **dadurch gekennzeichnet, dass** sich die Luftzuleitung (25) entlang der fahrzeugäußeren Seite des Fahrzeugrades (10) erstreckt.

4. Reifenbefüllvorrichtung nach einem der Ansprüche 1 bis 3, **dadurch gekennzeichnet, dass** der Luftkompressor (20) einen elektrischen Antrieb aufweist, wobei zumindest eine elektrische Zuleitung (46) des Antriebs eine als Schleifkontakt ausgebildete Verbindung (45) aufweist.

5. Reifenbefüllvorrichtung nach Anspruch 4, **dadurch gekennzeichnet, dass** der elektrische Antrieb mit 24 Volt Betriebsspannung arbeitet.

6. Reifenbefüllvorrichtung nach Anspruch 4 oder 5, **dadurch gekennzeichnet, dass** die elektrische Zuleitung (46) durch die Radnabe (5) oder einen Bestandteil der Radnabe geführt ist.

7. Reifenbefüllvorrichtung nach einem der Ansprüche 4 bis 6, **dadurch gekennzeichnet, dass** die elektrische Zuleitung (46) durch eine Öffnung (6A) in einem Nabenflansch (6) führt, welcher Bestandteil der Radnabe (5) ist, und an welchem das Fahrzeugrad (10) befestigt ist.

8. Reifenbefüllvorrichtung nach einem der Ansprüche 4 bis 7, **dadurch gekennzeichnet, dass** sich die als Schleifkontakt ausgebildete Verbindung (45) an dem fahrzeuginneren Ende der Radnabe (5) befindet.

9. Reifenbefüllvorrichtung nach einem der Ansprüche 4 bis 8, **gekennzeichnet durch** einen entlang einer Kreisbahn arbeitenden Schleifkontakt (45).

10. Reifenbefüllvorrichtung nach Anspruch 4 oder 5, **gekennzeichnet durch** einen auf der Nabenachse arbeitenden Schleifkontakt (45).

11. Reifenbefüllvorrichtung nach einem der Ansprüche 1 bis 3, **dadurch gekennzeichnet, dass** der Luftkompressor (20) mechanisch aus der Relativbewegung der Abdeckung (15) gegenüber dem Achselement (2), auf dem die Radnabe (5) drehgelagert ist, angetrieben ist.

12. Reifenbefüllvorrichtung nach Anspruch 11, **dadurch gekennzeichnet, dass** Bestandteil des Kompressorantriebs ein Ritzel (51) ist, welches mit einer an dem Achselement (2) ausgebildeten Verzahnung (50) kämmt.

13. Reifenbefüllvorrichtung nach Anspruch 12, **dadurch gekennzeichnet, dass** das Ritzel (51) bis zu seinem Eingriff in die Verzahnung (50) parallel zur Nabenachse (A) verlagerbar ausgebildet ist.

14. Reifenbefüllvorrichtung nach Anspruch 11, **dadurch gekennzeichnet, dass** Bestandteil des Kompressorantriebs ein längs der Nabenachse (A) verlagerbar ausgebildeter Konus (55) ist, und dass das Achselement (2) auf der Nabenachse (A) mit einem korrespondierenden Konus (56) versehen ist.

15. Reifenbefüllvorrichtung nach einem der vorangehenden Ansprüche, **dadurch gekennzeichnet, dass** das Kompressorgehäuse (21) durch eine Drehung von vorzugsweise weniger als 180° an der Abdeckung (15) befestigbar ist.

16. Reifenbefüllvorrichtung nach einem der vorangehenden Ansprüche, **dadurch gekennzeichnet, dass** der Luftkompressor (20) eine Luftansaugöffnung (26) aufweist, die auf dem Umfang des Kompressorgehäuses (21) angeordnet ist.

17. Reifenbefüllvorrichtung nach Anspruch 16, **dadurch gekennzeichnet, dass** das Kompressorgehäuse (21) durch eine von außen auf das Kompressorgehäuse aufgesetzte Kappe (30) abgedeckt ist, wobei zwischen der Kappe (30) und dem Kompressorgehäuse (21) ein nur zu der Radnabe (5) hin offener Ringspalt (32) angeordnet ist, in dem sich die Luftansaugöffnung (26) befindet.

18. Reifenbefüllvorrichtung nach Anspruch 17, **gekennzeichnet durch** eine in dem Ringspalt (32) zwischen dessen zu der Radnabe (5) hin gerichteter Öffnung und der Luftansaugöffnung (26) angeordnete Dichtung (40).

19. Reifenbefüllvorrichtung nach Anspruch 18, **dadurch gekennzeichnet, dass** die Dichtung (40) ringförmig um die Abdeckung (15) und/oder das Kompressorgehäuse (21) herum angeordnet ist.

20. Reifenbefüllvorrichtung nach einem der vorangehenden Ansprüche, **dadurch gekennzeichnet, dass** der Luftkompressor (20) eine im Wesentlichen flache, zylindrische Form aufweist, bei der das Verhältnis der Länge in Richtung der Nabenachse zu dem Durchmesser 0,1 bis 0,4 beträgt.

21. Reifenbefüllvorrichtung nach einem der vorangehenden Ansprüche, **dadurch gekennzeichnet, dass** der Ausgangsdruck des Luftkompressors (20) mehr als 7 bar beträgt.

## Claims

1. Tyre inflation device for a vehicle, with an air compressor (20) which is connected by means of an air supply line (25) to the volume of air in the tyres of the vehicle wheel (10), wherein the vehicle wheel (10) is fastened to a rotatably mounted wheel hub (5), **characterised in that** the air compressor (20) is arranged on a cover (15) fastened non-rotatably on the wheel hub (5), and that the cover (15) closes off the rotary bearing (3) towards the outside of the vehicle, wherein the air compressor (20) is arranged in a compressor housing (21) which is fastened to the cover (15) from outside the vehicle.

2. Tyre inflation device according to claim 1, **characterised in that** the air supply line (25) is provided with an adapter (29) for pressure-tight connection to the tyre inflation valve which is preferably arranged on the vehicle-outer side of the vehicle wheel (10).

3. Tyre inflation device according to one of claims 1 or 2, **characterised in that** the air supply line (25) extends along the side of the vehicle wheel (10) outside the vehicle.

4. Tyre inflation device according to one of claims 1 to 3, **characterised in that** the air compressor (20) has an electrical drive, wherein at least one electrical supply line (46) of the drive has a connection (45) designed as a sliding contact.

5. Tyre inflation device according to claim 4, **characterised in that** the electrical drive functions with an operating voltage of 24 volts.

6. Tyre inflation device according to claim 4 or 5, **characterised in that** the electrical supply line (46) is routed through the wheel hub (5) or a component of the wheel hub.

7. Tyre inflation device according to one of claims 4 to 6, **characterised in that** the electrical supply line (46) is routed through an opening (6A) in a hub flange (6) which is a component of the wheel hub (5) and on which the vehicle wheel (10) is fastened.

8. Tyre inflation device according to one of claims 4 to 7, **characterised in that** the connection (45) designed as a sliding contact is located on the vehicle-inner end of the wheel hub (5).

9. Tyre inflation device according to one of claims 4 to 8, **characterised by** a sliding contact (45) operating along a circular path.

10. Tyre inflation device according to claim 4 or 5, **characterised by** a sliding contact (45) operating on the hub axle.

11. Tyre inflation device according to one of claims 1 to 3, **characterised in that** the air compressor (20) is driven mechanically by the relative movement of the cover (15) with respect to the axle element (2) on which the wheel hub (5) is rotatably mounted.

12. Tyre inflation device according to claim 11, **characterised in that** a pinion (51), which meshes with a toothing (50) formed on the axle element (2), is a component of the compressor drive.

13. Tyre inflation device according to claim 12, **characterised in that** the pinion (51) is movable parallel to the hub axle (A) until it engages in the toothing (50).

14. Tyre inflation device according to claim 12, **characterised in that** a cone (55) which is movable along the hub axle (A) is a component of the compressor drive, and **in that** the axle element (2) on the hub axle (A) is provided with a corresponding cone (56).

15. Tyre inflation device according to one of the preceding claims, **characterised in that** the compressor housing (21) can be fastened to the cover (15) by a rotation of preferably less than 180°.

16. Tyre inflation device according to one of the preceding claims, **characterised in that** the air compressor (20) has an air intake opening (26) which is arranged on the circumference of the compressor housing (21).

17. Tyre inflation device according to claim 16, **characterised in that** the compressor housing (21) is covered by a cap (30) which is fitted onto the compressor housing from the outside, wherein an annular gap (32) in which the air intake opening (26) is located and which is only open towards the wheel hub (5) is arranged between the cap (30) and the compressor housing (21).

18. Tyre inflation device according to claim 17, **characterised by** a gasket (40) arranged in the annular gap (32) between the opening thereof directed towards the wheel hub (5) and the air intake opening (26).

19. Tyre inflation device according to claim 18, **characterised in that** the gasket (40) is arranged in an annular manner around the cover (15) and/or the compressor housing (21).

20. Tyre inflation device according to one of the preceding claims, **characterised in that** the air compressor (20) has a substantially flat, cylindrical shape, wherein the ratio of the length in the direction of the hub axle to the diameter is 0.1 to 0.4.

21. Tyre inflation device according to one of the preceding claims, **characterised in that** the output pressure of the air compressor (20) is more than 7 bars.

## Revendications

1. Dispositif de gonflage de pneus pour un véhicule, avec un compresseur d'air (20), qui est raccordé, par l'intermédiaire d'une conduite d'alimentation en air (25) au volume d'air dans le pneu de la roue du véhicule (10), la roue du véhicule (10) étant fixée à un moyeu de roue (5) logé de manière rotative, **caractérisé en ce que** le compresseur d'air (20) est disposé sur une protection (15) fixée sur le moyeu de roue (5) et **en ce que** la protection (15) ferme le palier rotatif (3) par rapport à l'extérieur du véhicule, le compresseur d'air (20) étant disposé dans un carter de compresseur (21), qui est fixé à la protection (15) à partir de l'extérieur du véhicule.

2. Dispositif de gonflage de pneus selon la revendication 1, **caractérisé en ce que** la conduite d'alimentation en air (25) est munie d'un adaptateur (29) pour la liaison étanche sous pression avec la soupape de gonflage de pneus disposée de préférence sur le côté de la roue du véhicule (10) le plus extérieur au véhicule.

3. Dispositif de gonflage de pneus selon l'une des revendications 1 ou 2, **caractérisé en ce que** la conduite d'alimentation en air (25) s'étend le long du côté de la roue du véhicule (10) le plus extérieur au véhicule.

4. Dispositif de gonflage de pneus selon l'une des revendications 1 à 3, **caractérisé en ce que** le compresseur d'air (20) comprend un entraînement électrique, au moins la conduite d'alimentation électrique (46) de l'entraînement comprenant une liaison (45) conçue comme un contact glissant.

5. Dispositif de gonflage de pneus selon la revendication 4, **caractérisé en ce que** l'entraînement électrique fonctionne avec une tension de service de 24 V.

6. Dispositif de gonflage de pneus selon la revendication 4 ou 5, **caractérisé en ce que** la conduite d'alimentation électrique (46) est guidée à travers le moyeu de roue (5) ou un composant du moyeu de roue.

7. Dispositif de gonflage de pneus selon l'une des revendications 4 à 6, **caractérisé en ce que** la conduite d'alimentation électrique (46) conduit, à travers une ouverture (6A), vers une bride de moyeu (6), laquelle fait partie du moyeu de roue (5) et à laquelle est fixée la roue du véhicule (10).

8. Dispositif de gonflage de pneus selon l'une des revendications 4 à 7, **caractérisé en ce que** la liaison (45) conçue comme un contact glissant se trouve sur l'extrémité du moyeu de roue (5) la plus intérieure du véhicule.

9. Dispositif de gonflage de pneus selon l'une des revendications 4 à 8, **caractérisé par** un contact glissant (45) fonctionnant le long d'une piste circulaire.

10. Dispositif de gonflage de pneus selon l'une des revendications 4 ou 5, **caractérisé par** un contact glissant (45) fonctionnant sur l'axe du moyeu.

11. Dispositif de gonflage de pneus selon l'une des revendications 1 à 3, **caractérisé en ce que** le compresseur d'air (20) est entraîné mécaniquement à partir du mouvement relative de la protection (15) par rapport à l'élément d'essieu (2) sur lequel le moyeu de roue (5) est logé de manière rotative.

12. Dispositif de gonflage de pneus selon la revendication 11, **caractérisé en ce qu'**un pignon (51), qui s'engrène avec une denture (50) réalisée sur l'élément d'essieu (2), fait partie de l'entraînement du compresseur.

13. Dispositif de gonflage de pneus selon la revendication 12, **caractérisé en ce que** le pignon (51) est conçu de manière mobile jusqu'à son engrènement dans la denture (50) parallèlement à l'axe du moyeu (A).

14. Dispositif de gonflage de pneus selon la revendication 11, **caractérisé en ce qu'**un cône (55), conçu de manière mobile le long de l'axe du moyeu (A), fait partie de l'entraînement du compresseur et **en ce que** l'élément d'essieu (2) est muni, sur l'axe du moyeu (A), d'un cône (56) correspondant.

15. Dispositif de gonflage de pneus selon l'une des revendications précédentes, **caractérisé en ce que** le carter du compresseur (21) peut être fixé à la protection (15) par une rotation de préférence inférieure à 180°.

16. Dispositif de gonflage de pneus selon l'une des revendications précédentes, **caractérisé en ce que** le compresseur d'air (20) comprend une ouverture d'aspiration d'air (26) qui est disposée sur la circonférence du carter du compresseur (21).

17. Dispositif de gonflage de pneus selon la revendication 16, **caractérisé en ce que** le carter du compresseur (21) est recouvert d'un capuchon (30) posé sur le carter du compresseur de l'extérieur, un interstice annulaire (32) ouvert uniquement en direction du moyeu de roue (5), dans lequel se trouve l'ouverture d'aspiration d'air (26), étant disposé entre le capuchon (30) et le carter du compresseur (21).

18. Dispositif de gonflage de pneus selon la revendication 17, **caractérisé par** un joint d'étanchéité (40) disposé dans l'interstice annulaire (32) entre son ouverture orientée vers le moyeu de roue (5) et l'ouverture d'aspiration d'air (26).

19. Dispositif de gonflage de pneus selon la revendication 18, **caractérisé en ce que** le joint d'étanchéité (40) est disposé de manière annulaire autour de la protection (15) et/ou du carter de compresseur (21).

20. Dispositif de gonflage de pneus selon l'une des revendications précédentes, **caractérisé en ce que** le compresseur d'air (20) présente une forme cylindrique globalement plate dans laquelle le rapport entre la longueur en direction de l'axe de moyeu et le diamètre est de 0,1 à 0,4.

21. Dispositif de gonflage de pneus selon l'une des revendications précédentes, **caractérisé en ce que** la pression de sortie du compresseur d'air (20) est supérieure à 7 bar.
